# EUROPEAN PATENT APPLICATION

(11) **EP 2 851 557 A1**
(43) Date of publication of application: **25.03.2015**
(21) Application number: 13185770.8
(22) Date of filing: 24.09.2013
(51) Int. Cl.: F03D 1/06, F03D 7/02

(54) **A wind turbine blade with root end aerodynamic flaps**

(71) Applicant: LM WP Patent Holding A/S, 6000 Kolding (DK)
(72) Inventor: Slot, Mark, Olaf, 5250 Odense SV (DK)
(74) Representative: Hussey, Paul Anthony

(57) **Abstract**

A wind turbine blade is described having aerodynamic flaps at the root section of the blade. The flaps are provided on that section of the blade having a circular cross-sectional profile, e.g. a circular root end and/or a cylindrical hub extender. The flaps act to delay initial flow separation for the circular profile as well as provide more well-defined flow separation, thereby reducing the drag and increasing the lift of the root section of the blade. The use of such flaps on a blade result in an increase in Annual Energy Production for the blade design, without the disadvantages associated with traditional aerodynamic shells or fairings.

## Description

### Field of the Invention

The present invention relates to a wind turbine blade, in particular a blade having aerodynamic flaps at the blade root end.

### Background of the Invention

The power generated by a wind turbine is related to the area swept by the wind turbine blades during turbine operation.

In one effort to provide for increased power generation - usually referred to as Annual Energy Production, or AEP - wind turbines are often provided with longer blades mounted to a wind turbine hub. The use of longer wind turbine blades requires more blade material, with additional reinforcing element to support the entire length of the blade. Such longer blades accordingly result in root end sections of increased dimensions, presenting substantially circular cross-sectional profiles of several metres diameter.

An alternative to the use of longer blades is to provide wind turbine blades mounted on hub extenders, the hub extender mounted to the turbine hub. This provides an increased swept area of the blades, when compared to the situation where the blades are mounted to the hub directly. Such hub extenders generally comprise substantially cylindrical load-bearing sections, e.g. a metallic tubular extension.

The presence of such relatively large sections having substantially circular cross-sectional profiles introduces additional drag to the wind turbine blades as they rotate about the turbine hub, negatively impacting on the wind turbine operation. In an attempt to reduce these levels of drag and to provide some contributing lift, aerodynamic shells or fairings are often applied to or around the circular root sections or cylindrical hub extenders, to provide these portions of the blades with a more aerodynamic cross-sectional profile.

An example of an aerodynamic shell (also called an aeroshell) or fairing used for the root section of a large blade can be seen in US Patent No. 8,317,479.

An example of an aeroshell or fairing used for a hub extender of a wind turbine blade can be seen in US Patent Application Publication No. 2009/0148291.

A considerable difficulty with the use of such solutions is that such aeroshells must be constructed to be sufficiently strong and durable to allow for operation in all-weather conditions for several years, while allowing for a degree of flexibility of the components to provide for bending and flexing of the wind turbine blade when under high loading conditions. Providing components to satisfy such requirements can result in increased design difficulty and high end cost of components.

It is an object of the invention to provide an alternative solution to such aeroshells or fairings, which provides for reduced cost, while acting to reduce the drag or increase the lift of substantially circular root sections of wind turbine blades.

### Summary of the Invention

Accordingly, there is provided a wind turbine blade for a rotor of a wind turbine having a substantially horizontal rotor shaft, said rotor comprising a hub, from which the blade extends substantially in a radial direction when mounted to the hub, the blade having a longitudinal direction with a tip end and a root end and a transverse direction, the blade comprising:
a profiled contour including a pressure side and a suction side, as well as a leading edge and a trailing edge with a chord line having a chord length extending therebetween, the chord line transverse to said longitudinal direction, the profiled contour, when being impacted by an incident air-flow, generating a lift,
the wind turbine blade further comprising a root section having a substantially circular cross-sectional profile, wherein the blade further comprises:
   at least one pressure-side flap, and
   at least one suction-side flap, wherein said pressure-side and suction-side flaps act to increase the lift and/or reduce the drag of said root section.

The use of pressure- and suction-side flaps at the root end of the blade allows for an increase in blade performance. The pressure-side flap would deflect the flow on the lower side of the circular or cylindrical section of the blade in a downward direction, thereby generating some lift. The suction-side flap results in a cleaner and better defined flow separation on the suction side, reducing the drag of the circular or cylindrical section of the blade.

It will be understood that the pressure- and suction-side flaps are preferably at least partially located at the root section of said blade.

In one aspect, said root section is at least partially provided by a blade root extender having a substantially circular cross-sectional profile.

It will be understood that the root section of the wind turbine blade may be defined as the region of a blade adjacent the root end of the blade which is used to mount to a wind turbine hub or other attachment location, and/or a cylindrical hub extender which is positioned between the root end of the wind turbine blade and a wind turbine hub. The use of said flaps on a cylindrical hub extender of a wind turbine blade significantly increased the aerodynamic performance of the hub extender.

Preferably, said pressure-side and suction-side flaps are formed by substantially planar plates.

Providing the flaps as relatively simple structures allows for ease of manufacturing and assembly, and allows for the use of relatively low-cost materials in construction.

Preferably, said pressure-side and/or said suction-side flaps extend from respective attachment points on the surface of said root section in a direction substantially towards the trailing edge of the wind turbine blade.

Preferably, said pressure-side flap extends from an attachment point on the surface of said root section at an angle of between approximately 45-110 degrees to a tangent to said surface at said attachment point, preferably between approximately 45-90 degrees to a tangent to said surface at said attachment point.

Preferably, said suction-side flap extends from an attachment point on the surface of said root section at an angle of between approximately 0-20 degrees to a tangent to said surface at said attachment point.

Preferably, the length of said pressure-side and/or suction-side flaps is between approximately 5-20% of the diameter of the root section, preferably between 10-15% of the diameter.

Preferably, said pressure-side and/or suction-side flaps extend from respective attachment points on the surface of said root section, wherein said attachment point is located spaced from the leading edge of the blade, between the leading edge and the point on the root section profile where it is predicted a pressure-side or a suction-side flow separation point will occur.

Preferably, said flaps extend from the surface of the root section at a location between the leading edge of the blade and the separation point for a normal operation.

In general, the separation point in trans turbulent flow is estimated to be between approximately 115-120 degrees from the stagnation point. For a zero angle of attack, the stagnation point is at the leading edge, but for an angle of attack of α the stagnation point and the separation points move a corresponding angle α. Angles of attack in the blade root can be approximated by tan⁻¹(free wind speed/rotational speed).

In one aspect, the wind turbine blade comprises an airfoil section closest the tip of the blade and a transition section between the root section and the airfoil section, wherein said pressure-side and/or suction-side flaps extend into said transition section of the blade, preferably into those sections of the blade having a relative thickness or a thickness-to-chord ratio of between approximately 70-100%.

Preferably, the wind turbine blade comprises at least one brace member extending between said pressure-side and suction-side flaps, preferably a resilient brace.

In order to prevent excessive oscillation of the flaps during turbine operation, a simple brace or reinforcing element may be positioned between the flaps. It will be understood that such a brace may be of a resilient material, such that an acceptable degree of flexion is allowed between the flaps during turbine operation.

In one embodiment, the wind turbine blade comprises a multi-part pressure-side flap, wherein the pressure side flap comprises:
a first flap part which extends from an attachment point on the surface of said root section at an angle of between approximately 0-30 degrees to a tangent to said surface at said attachment point; and
a second flap part which extends to a free end of said multi-part pressure-side flap, said second flap part extending at an angle of between approximately 45-90 degrees to said tangent to said surface at said attachment point.

Preferably, said first and second flap parts comprise planar plate members.

In one aspect, said pressure-side and suction-side flaps extend to a free end, wherein a cover member extends between said free ends of said flaps. In one aspect, said cover member may comprise a flexible canvas member.

There is further provided a wind turbine comprising at least one wind turbine blade as described above.

### Description of the Invention

Embodiments of the invention will now be described, by way of example only, with reference to the accompanying drawings, in which:
Fig. 1 shows a wind turbine;
Fig. 2 shows a schematic view of a wind turbine blade according to an aspect of the invention;
Fig. 3 shows a schematic view of an airfoil profile of the blade of Fig. 2;
Fig. 4 shows a schematic view of the wind turbine blade of Fig. 2, seen from above and from the side;
Fig. 5 illustrates a plan view of a wind turbine blade comprising a hub extender according to an aspect of the invention;
Fig. 6 illustrates a cross-sectional view of a root section of a wind turbine blade according to a first embodiment of the invention; and
Fig. 7 illustrates a cross-sectional view of a root section of a wind turbine blade according to a second embodiment of the invention

It will be understood that elements common to the different embodiments of the invention have been provided with the same reference numerals in the drawings.

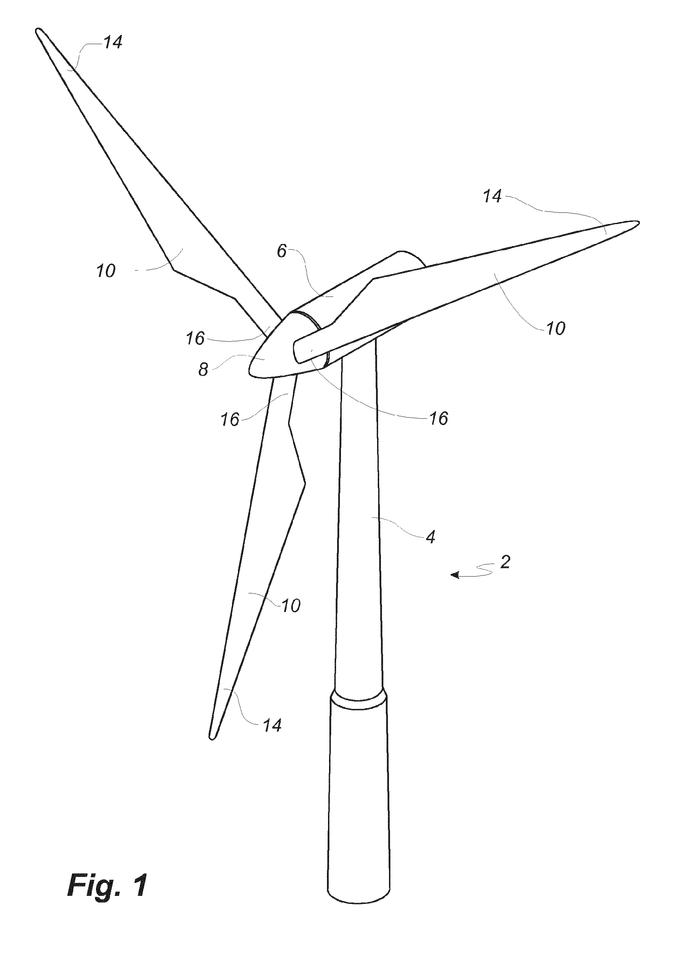

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

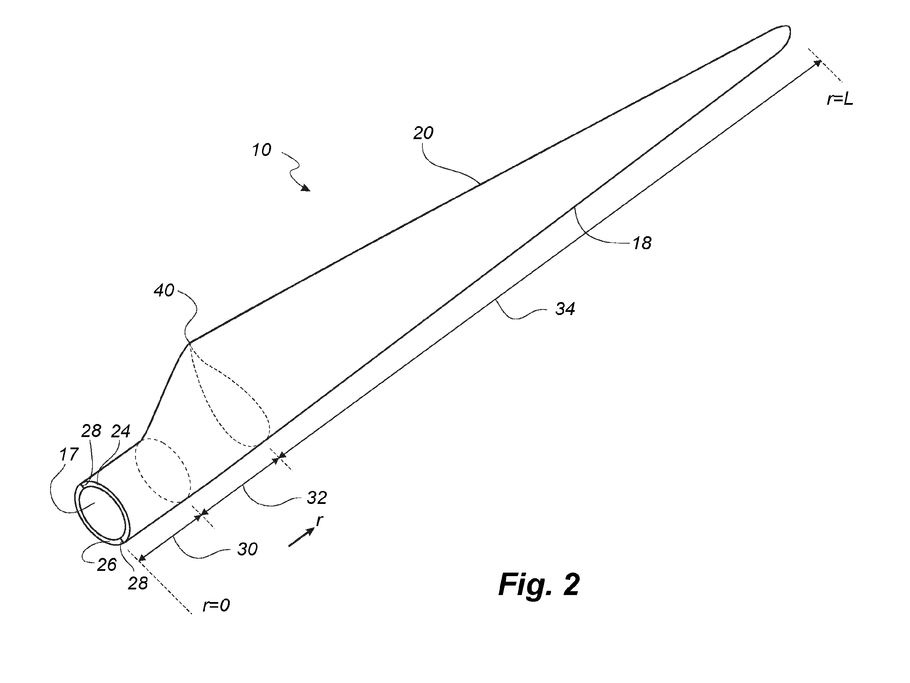

Fig. 2 shows a schematic view of a wind turbine blade 10. The wind turbine blade 10 has the shape of a conventional wind turbine blade and comprises a root region 30 closest to the hub 8, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile 42 gradually changing from the circular or elliptical shape 40 of the root region 30 to the airfoil profile 50 of the airfoil region 34. The chord length of the transition region 32 typically increases substantially linearly with increasing distance *r* from the hub.

The airfoil region 34 has an airfoil profile 50 with a chord extending between the leading edge 18 and the trailing edge 20 of the blade 10. The width of the chord decreases with increasing distance *r* from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

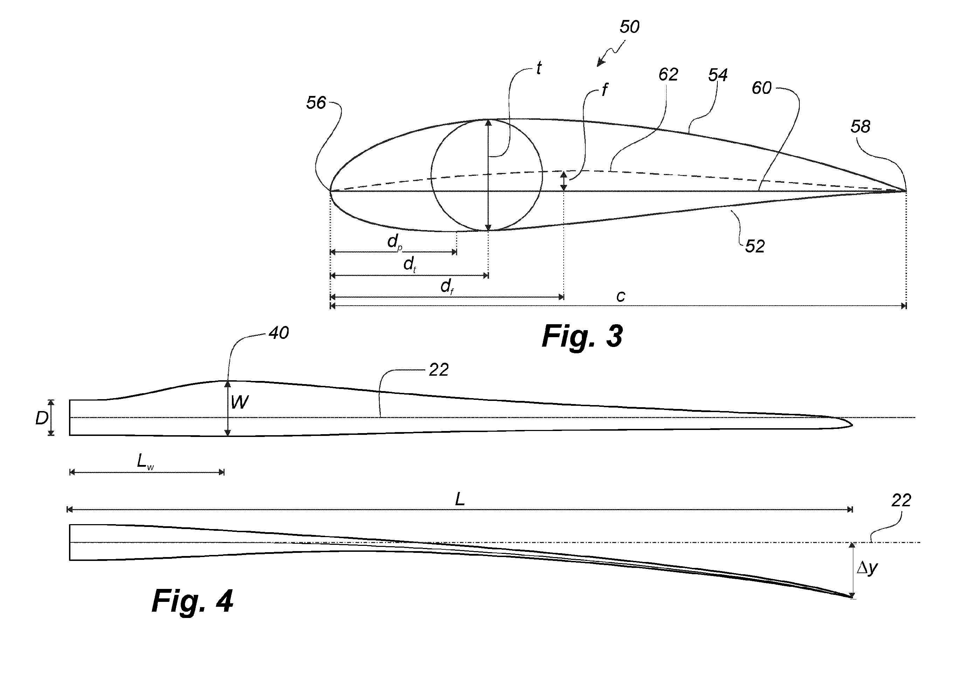

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber *f*, the position *d_{f}* of the maximum camber *f*, the maximum airfoil thickness *t*, which is the largest diameter of the inscribed circles along the median camber line 62, the position *dₜ* of the maximum thickness *t*, and a nose radius (not shown). These parameters are typically defined as ratios to the chord length *c*. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows some other geometric parameters of the blade. The blade has a total blade length *L*. As shown in Fig. 2, the root end is located at position *r* = 0, and the tip end located at *r* = *L*. The shoulder 40 of the blade is located at a position *r* = *L_{w}*, and has a shoulder width *W*, which equals the chord length at the shoulder 40. The diameter of the root is defined as *D*. Further, the blade is provided with a prebend, which is defined as Δ*y*, which corresponds to the out of plane deflection from a pitch axis 22 of the blade.

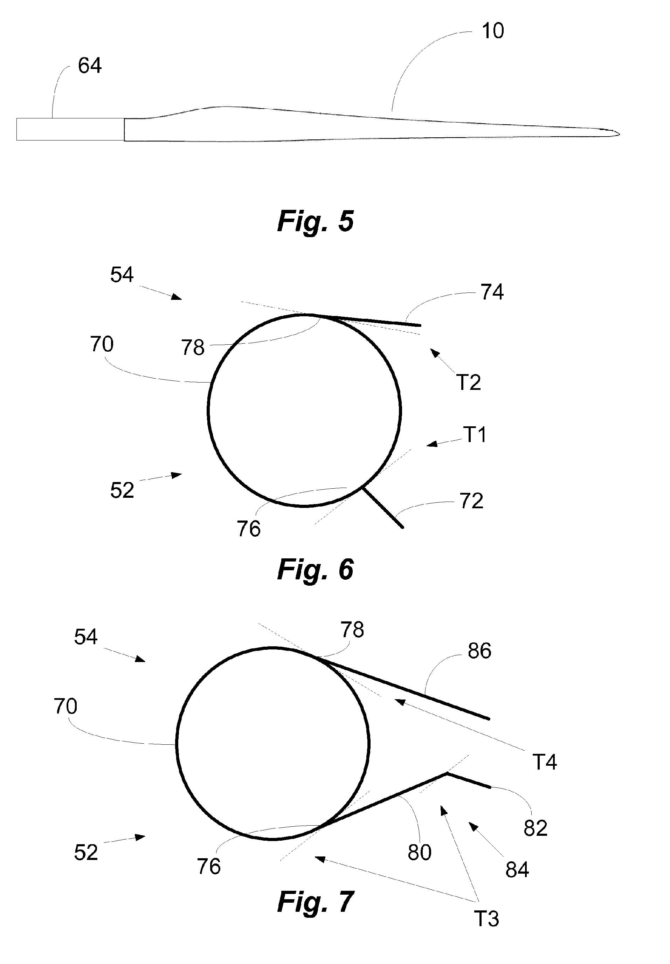

A further embodiment of wind turbine blade 10 is illustrated in Fig. 5, wherein the blade 10 is provided with a hub extender 64. The hub extender 64 is provided as a cylindrical tubular member, and is mounted to the wind turbine hub 8 to provide for an increased swept area of the wind turbine blades 10. The hub extender 64 may be formed from a material dimensioned to bear the load of the wind turbine blade 10 during turbine operation, and to transfer said load to the hub 8. The hub extender 64 shown in Fig. 5 is cylindrical in shape, but it will be understood that any suitable shape or combination of shapes may be used, e.g. a frusto-conical shape, such that the hub extender 64 is suitable for coupling at a first end of the extender 64 to a bolt circle provided on the hub 8, and at a second end of the extender 64 to the root end bolt circle of the wind turbine blade 10.

The wind turbine blade 10 generally comprises a shell made of fibre-reinforced polymer, and is typically made as a pressure side or upwind shell part 24 and a suction side or downwind shell part 26 that are glued together along bond lines 28 extending along the trailing edge 20 and the leading edge 18 of the blade 10. Wind turbine blades are generally formed from fibre-reinforced plastics material, e.g. glass fibres and/or carbon fibres which are arranged in a mould and cured with a resin to form a solid structure. Modern wind turbine blades can often be in excess of 30 or 40 metres in length, having blade root diameters of several metres. Wind turbine blades are generally designed for relatively long lifetimes and to withstand considerable structural and dynamic loading.

With reference to Fig. 6, a cross-sectional view of a first embodiment of a wind turbine blade 10 according to the invention is illustrated. The cross-sectional view is shows a substantially circular profile, and is representative of a cross-section made at the root section 70 of a blade 10 in the root region 30 of the blade body adjacent the blade root 16, and/or a cross-section made through a hub extender 64 which may be coupled to the blade root 16. The sides of the profile corresponding to the leading and trailing edges are indicated at 18 and 20 respectively, with the suction and pressure sides indicated at 54 and 52. The direction of airflow in the region of the cross-section is indicated by arrow A.

The root section 70 of the blade 10 comprises a pressure-side flap 72 located on the pressure side 52 of the root section 70 and a suction-side flap 74 located on the suction side 54 of the root section 70. The flaps 72,74 extend from respective pressure- and suction-side attachment points 76,78 defined on the surface of the root section 70, the flaps 72,74 extending in a direction substantially away from the leading edge 18 of the root section 70 and substantially towards the trailing edge 20.

In Fig. 6, the pressure-side flap 72 extends from the surface of the root section 70 at an angle of approximately 90 degrees to a tangent T1 to said surface at the pressure-side attachment point 76. The flap 72 deflects airflow on the pressure side 52 of the cylindrical root section 70 in a downward direction, thereby generating additional lift. It will be understood that the pressure-side flap 72 may be arranged to extend from the surface of the root section 70 at an angle of between approximately 45-90 degrees to the tangent to the surface at the pressure-side attachment point 76.

The suction-side flap 74 extends from the surface of the root section 70 at an angle of approximately 5 degrees to a tangent T2 to said surface at the suction-side attachment point 78. The use of the suction-side flap 74 result in a cleaner and more well defined flow separation on the suction side 54 of the cylindrical root section 70, resulting in further improved lift and reduced drag. It will be understood that the suction-side flap 74 may be arranged to extend from the surface of the root section 70 at an angle of between approximately 0-20 degrees to the tangent to the surface at the suction-side attachment point 78.

The attachment points 76,78 for the flaps 72,74 are located spaced from the leading edge 18 of the root section 70, between the leading edge 18 and that point on the profile of the root section 70 where it is predicted a pressure-side or a suction-side flow separation point will occur. Accordingly, the airflow over the root section 70 will reach the flaps 72,74 before flow separation occurs.

The lengths of the flaps 72,74 may be arranged to be between approximately 5-20% of the diameter of circular profile of the root section 70, preferably between 10-15% of the diameter.

The flaps 72,74 act to delay flow separation, and provide well-defined flow separation points, resulting in a reduction in the formation of wake vortices. Accordingly, for the root section 70, the associated lift is increased and the drag is decreased.

A further embodiment of the invention is illustrated in Fig. 7. In this embodiment, the pressure-side flap is formed by a multi-part flap 84, comprising at least a first flap part 80 and a second flap part 82. The first flap part 80 extends from the pressure-side attachment point 76 at an angle of approximately 15 degrees to a tangent T3 to the surface of the root section 70 at said attachment point 76. Preferably, the first flap part 80 may be attached at an angle of between approximately 0-30 degrees to said tangent T3 to said surface at said attachment point 76.

The second flap part 82 extends from the end of said first flap part 80, the second flap part 82 extending at an angle of approximately 50 degrees to said tangent T3 to the surface at said attachment point 76. Preferably, the second flap part 82 may be attached to the end of the first flap part 80 at an angle between approximately 45-90 degrees to the tangent T3 to said surface at said attachment point 76. The first and second flap parts 80,82 together form an angled flap structure 84.

The suction-side flap 86 extends from the suction-side attachment point 78 at an angle of approximately 15 degrees to a tangent T4 to the surface of the root section 70 at said attachment point 78.

The flaps 84,86 are arranged towards the trailing edge 20 of the root section 70, and are selected to have a longer length than the flaps 72,74 of the first embodiment, preferably between approximately 80-150% of the diameter of circular profile of the root section 70.

The arrangement of the flaps in this manner allows for the flaps to approximate a shaped aeroshell, providing a significant increase in AEP for the circular section of the blade, without the design disadvantages of a full aeroshell structure.

It will be understood that the multi-part pressure-side flap may comprise any number of flap parts, to form a profiled flap surface which may aid to provide for attached flow. It will be further understood that the suction side flap may be formed from a plurality of flap parts, in order to form a profiled flap surface which increased the flow attachment at the trailing edge 20 of the root section 70.

The flaps 72,74,84,86 may be attached to the root section 70 of the blade 10, and the flap parts 80,82 may be attached to each other, using any suitable connection means, for example bolting or riveting, a snap-fit connection, an adhesive bond, etc.

The flaps 72,74,84,86 and the flap parts 80,82 may be formed from planar members to allow for ease of manufacture and handling. The planar members may be formed from any suitable material, such as a composite material, e.g. a glass- or carbon-fibre composite structure; a metallic member; a plastics material; a natural or synthetic rubber; etc. In a further aspect, the planar members may be formed from a flexible material, e.g. fabric, sailcloth, canvas or similar material, which is stretched on a frame, and wherein said frame is attached to the root section 70.

In a further aspect, a resilient brace or coupling member (not shown) may be located between the flaps 72 and 74 or the flaps 84 and 86. The brace may be used to prevent fluttering of the flaps 72,74,84,86 during turbine operation. Such a brace may comprise a truss structure extending between the flaps 72,74,84,86. In a further aspect, a flexible covering member, e.g. a canvas sheeting, may extend between the flaps 72 and 74 or the flaps 84 and 86.

The use of a blade having such a combination of pressure- and suction-side flaps 72,74,84,86 provides an increase in AEP without the disadvantages of aeroshells or fairings.

The invention is not limited to the embodiments described herein, and may be modified or adapted without departing from the scope of the present invention.

## Claims

1. A wind turbine blade for a rotor of a wind turbine having a substantially horizontal rotor shaft, said rotor comprising a hub, from which the blade extends substantially in a radial direction when mounted to the hub, the blade having a longitudinal direction with a tip end and a root end and a transverse direction, the blade comprising:
a profiled contour including a pressure side and a suction side, as well as a leading edge and a trailing edge with a chord line having a chord length extending therebetween, the chord line transverse to said longitudinal direction, the profiled contour, when being impacted by an incident air-flow, generating a lift,
the wind turbine blade further comprising a root section having a substantially circular cross-sectional profile, wherein the blade further comprises:
at least one pressure-side flap, and
at least one suction-side flap, wherein said pressure-side and suction-side flaps act to increase the lift and/or reduce the drag of said root section.

2. The wind turbine blade of claim 1, wherein the pressure- and suction-side flaps are at least partially located at the root section of said blade.

3. The wind turbine blade of claim 1 or claim 2, wherein said root section is at least partially provided by a blade root extender having a substantially circular cross-sectional profile.

4. The wind turbine blade of any one of claims 1-3, wherein said pressure-side and suction-side flaps are formed by substantially planar plates.

5. The wind turbine blade of any one of claims 1-4, wherein said pressure-side and/or said suction-side flaps extend from respective attachment points on the surface of said root section in a direction substantially towards the trailing edge of the wind turbine blade.

6. The wind turbine blade of claim 5, wherein said pressure-side flap extends from an attachment point on the surface of said root section at an angle of between approximately 45-90 degrees to a tangent to said surface at said attachment point.

7. The wind turbine blade of claim 5 or claim 6, wherein said suction-side flap extends from an attachment point on the surface of said root section at an angle of between approximately 0-20 degrees to a tangent to said surface at said attachment point.

8. The wind turbine blade of any preceding claim, wherein the length of said pressure-side and/or suction-side flaps is between approximately 5-20% of the diameter of the root section, preferably between 10-15% of the diameter.

9. The wind turbine blade of any preceding claim, wherein said pressure-side and/or suction-side flaps extend from respective attachment points on the surface of said root section, wherein said attachment point is located spaced from the leading edge of the blade, between the leading edge and the point on the root section profile where it is predicted a pressure-side or a suction-side flow separation point will occur.

10. The wind turbine blade of any preceding claim, wherein the wind turbine blade comprises an airfoil section closest the tip of the blade and a transition section between the root section and the airfoil section, wherein said pressure-side and/or suction-side flaps extend into said transition section of the blade, preferably into those sections of the blade having a relative thickness or a thickness-to-chord ratio of between approximately 70-100%.

11. The wind turbine blade of any preceding claim, wherein the wind turbine blade comprises at least one brace member extending between said pressure-side and suction-side flaps, preferably a resilient brace.

12. The wind turbine blade of any preceding claim, wherein said pressure-side and suction-side flaps are formed from planar members, wherein said planar members are formed from at least one of the following materials a composite material; a metallic member; a plastics material; a natural or synthetic rubber.

13. The wind turbine blade of any preceding claim, wherein the wind turbine blade comprises a multi-part pressure-side flap, wherein the pressure side flap comprises:
a first flap part which extends from an attachment point on the surface of said root section at an angle of between approximately 0-30 degrees to a tangent to said surface at said attachment point; and
a second flap part which extends to a free end of said multi-part pressure-side flap, said second flap part extending at an angle of between approximately 45-90 degrees to said tangent to said surface at said attachment point.

14. The wind turbine blade of claim 13, wherein said first and second flap parts comprise planar plate members.

15. A wind turbine comprising at least one wind turbine blade as claimed in any one of claims 1-14.
